# EUROPÄISCHE PATENTANMELDUNG

(11) **EP 4 807 646 A1**
(43) Veröffentlichungstag der Anmeldung: **16.09.2026**
(21) Anmeldenummer: 26158168.0
(22) Anmeldetag: 12.02.2026
(51) Int. Cl.: G06Q 10/20, G06Q 10/30, G06Q 30/02

(54) **BEWERTEN EINES HAUSGERÄTS**

(30) Priorität: 12.03.2025 DE 102025109350
(71) Anmelder: BSH Hausgeräte GmbH, 81739 München (DE)
(72) Erfinder: Pak, Nina, 81829 München (DE); Dolezalek, Pascal, 71686 Remseck am Neckar (DE); Hörmann, Vitus, 89353 Glött (DE); Graf, Gerhard, 89407 Dillingen (DE); Szymanowski, Hubert, 02-222 Warsawa (PL); Szafran, Paulina, 97-425 Zelow (PL)

(57) **Zusammenfassung**

Ein Verfahren (200) zum Bewerten eines Hausgeräts (105) umfasst Schritte des Bestimmens (205) vorbestimmter Nutzungsparameter für eine Vielzahl weiterer Hausgeräte (105); des Bestimmens (215, 230) von Nutzungsparametern eines Referenzgeräts (305, 310) mit bekannter Qualität; des Bestimmens (255) eines mehrdimensionalen Abstands der Nutzungsparameter des Hausgeräts (105) von den Nutzungsparametern des Referenzgeräts (305, 310); und des Bewertens (260) des Hausgeräts (105) auf der Basis des Abstands und der Qualität des Referenzgeräts (305, 310).

## Beschreibung

Die vorliegende Erfindung betrifft die Bewertung eines Hausgeräts. Genauer gesagt betrifft die Erfindung die Qualitätsbewertung eines gebrauchten Hausgeräts.

In einem Haushalt können verschiedene Hausgeräte vorhanden sein, die jeweils eine haushaltsnahe Funktion erbringen. Ein neues Hausgerät kann von hoher Qualität sein, sodass es viele Jahre lang verwendet werden kann. Wegen verfügbar gewordenen Verbesserungen bei einem Neugerät oder veränderten Umständen im Haushalt kann es jedoch wünschenswert sein, ein vorhandenes Hausgerät durch ein anderes zu ersetzen. Da das gebrauchte Gerät noch funktioniert, kann es eingetauscht oder verkauft werden.

Ein potenzieller Käufer eines gebrauchten Hausgeräts hat keine einfache Möglichkeit, die Qualität des Geräts zu beurteilen. Beim Handel via Internet-Plattform hat der Käufer weder die Möglichkeit, das Gerät vor dem Kauf in die Hand zu nehmen noch es auszuprobieren und muss sich auf den Eindruck von Bildern oder einer Beschreibung des Verkäufers verlassen. Der äußere Eindruck gibt aber nicht immer Aufschluss über die technische Qualität eines Geräts.

Eine der vorliegenden Erfindung zu Grunde liegende Aufgabe besteht in der Bereitstellung einer verbesserten Technik zur technischen Bewertung eines gebrauchten Hausgeräts. Die Erfindung löst diese Aufgabe mittels der Gegenstände der unabhängigen Ansprüche. Unteransprüche geben bevorzugte Ausführungsformen wieder.

Nach einem ersten Aspekt der vorliegenden Erfindung umfasst ein Verfahren zum Bewerten eines Hausgeräts Schritte des Bestimmens vorbestimmter Nutzungsparameter für eine Vielzahl weiterer Hausgeräte; des Bestimmens von Nutzungsparametern eines Referenzgeräts mit bekannter Qualität; des Bestimmens eines mehrdimensionalen Abstands der Nutzungsparameter des Hausgeräts von den Nutzungsparametern des Referenzgeräts; und des Bewertens des Hausgeräts auf der Basis des Abstands und der Qualität des Referenzgeräts.

Die Bewertung kann darauf hinweisen, mit welcher Nutzbarkeit des Hausgeräts gerechnet werden darf. Die Qualität bezieht sich auf die technische Nutzbarkeit des Hausgeräts und kann als Grundlage zur Abschätzung einer verbleibenden Nutzungsdauer oder Belastbarkeit dienen. So kann eine hohe Qualität auf eine lange verbleibende Nutzungsdauer bzw. Belastbarkeit und eine niedrige Qualität auf eine kurze Nutzungsdauer bzw. Belastbarkeit hinweisen. Die Qualität bzw. eine daraus abgeleitete Größe ist bezogen auf Erfahrungen mit vergleichbaren Hausgeräten und stellt somit eine statistische Größe dar, die mit einer guten Wahrscheinlichkeit zutrifft. Die Qualität des Referenzgeräts kann beispielsweise durch Versuche oder auch durch eine heuristische Betrachtung bestimmt sein.

Allgemein wird hierin davon ausgegangen, dass betrachtete Hausgeräte noch funktionsfähig sind. Darunter wird verstanden, dass eine Grundfunktionalität des Hausgeräts noch erbracht werden kann. So muss beispielsweise ein Bügeleisen noch ausreichend heiß werden, um damit bügeln zu können, oder eine Kaffeemaschine muss noch ein Kaffeegetränk produzieren können. Unter Umständen können kleinere Einschränkungen bei der Bedienung hingenommen werden, beispielsweise eine leicht verkratzte Anzeige oder ein abgenutztes Bedienelement. Üblicherweise müssen alle Funktionen, die durch das Hausgerät abgedeckt sind, noch erbracht werden können. Ist für eine Funktion ein Zubehör erforderlich, das abhandengekommen ist, so kann die Funktion als nicht erbringbar gelten.

Bevorzugt ist der Abstand bezüglich einer Standardabweichung der Nutzungsparameter normiert. Insbesondere kann der Abstand als Mahalanobis-Abstand oder Mahalanobis-Distanz (MD) bestimmt werden. Dadurch kann ein skalen- und translationsinvarianter Wert bereitgestellt sein, der die Bewertung erleichtert. Intuitiv gibt der Mahalanobis-Abstand zweier Punkte ihren Abstand in Standardabweichungen an. Die Anzahl der Nutzungsparameter, die dabei betrachtet werden können, ist beliebig wählbar; der Abstand kann vorteilhaft auch bezüglich einer großen Anzahl Nutzungsparameter bestimmt werden.

Weiter bevorzugt umfasst das Referenzgerät ein minimal verschlissenes Hausgerät. Das Referenzgerät kann positives Referenzgerät genannt werden und weist bevorzugt in allen betrachteten Nutzungsparametern einen möglichst optimalen Wert auf. Dieses Gerät muss nicht notwendigerweise real existieren, es kann ausreichen, wenn ein entsprechender Satz Nutzungsparameter bereitgestellt wird. Das positive Referenzgerät repräsentiert bevorzugt ein herstellungsfrisches Gerät, das praktisch noch keinen Nutzungsvorgängen ausgesetzt wurde. Es kann davon ausgegangen werden, dass das positive Referenzgerät den geringsten vorstellbaren Verschleiß aufweist und daher seine verbleibende Nutzbarkeit maximal ist. Bezüglich einer Verwendbarkeit oder einer Qualität kann dieses Gerät als optimal eingestuft werden. Das positive Referenzgerät kann einen wichtigen Referenzpunkt darstellen, gegenüber dem andere Hausgeräte eingeordnet werden können.

In einer Verfeinerung wird ein Anteil der Hausgeräte mit dem geringsten Abstand zum positiven Referenzgerät bestimmt. Der Anteil ist vorbestimmt und kann beispielsweise ca. 10% oder ca. 20% der betrachteten Hausgeräte umfassen. Die Bewertung des Hausgeräts kann dann auf der Basis des Abstands zu diesem Anteil bestimmt werden. Zur Bestimmung des Abstands kann ein Punkt als Mittelwert des Anteils bestimmt werden, und der Abstand eines Hausgeräts zum vorbestimmten Anteil kann als Abstand zu diesem Punkt bestimmt werden.

In ähnlicher Weise kann das Referenzgerät ein maximal verschlissenes Hausgerät umfassen. Das Referenzgerät kann negatives Referenzgerät genannt werden und weist bevorzugt in allen betrachteten Nutzungsparametern einen möglichst wenig optimalen Wert auf. Zur Bestimmung der Nutzungsparameter kann ein reales Hausgerät derart verwendet werden, dass die Nutzungsparameter einen maximalen Verschleiß und somit eine minimale verbleibende Nutzungsmöglichkeit anzeigen. Sollte das Hausgerät dabei einen Defekt entwickeln, so können die Nutzungsparameter unmittelbar vor dem Defekt verwendet werden, um den beschriebenen Datenpunkt zu bilden. Alternativ kann unter allen untersuchten Hausgeräten eines ausgewählt werde, das bezüglich der Nutzungsparameter am wenigsten ideal ist. In noch einer weiteren Ausführungsform können die Nutzungsparameter des negativen Referenzgeräts auch festgelegt werden, beispielsweise auf der Basis einer Verschleißrechnung oder einer projektierten Lebensdauer des Hausgeräts. Das negative Referenzgerät muss dann nicht real existieren. Das negative Referenzgerät kann ebenfalls einen wichtigen Referenzpunkt darstellen, gegenüber dem andere Hausgeräte eingeordnet werden können.

Auch hier kann ein Anteil der Hausgeräte mit dem geringsten Abstand zum negativen Referenzgerät bestimmt werden. Die Bewertung des Hausgeräts kann dann auf der Basis des Abstands zu diesem Anteil bestimmt werden. Zur Bestimmung des Abstands kann ein Punkt als Mittelwert des Anteils bestimmt werden, und der Abstand eines Hausgeräts zum vorbestimmten Anteil kann als Abstand zu diesem Punkt bestimmt werden. Der Anteil ist bevorzugt auch hier vorbestimmt und kann ca. 10 % der betrachteten Hausgeräte betragen. Wird auch ein minimal verschlissenes Hausgerät betrachtet, so ist bevorzugt, dass die jeweiligen Anteile bezüglich der Grundgesamtheit der Hausgeräte gleich groß sind, insbesondere ca. 10 %.

Gemäß einer weiteren Ausführungsform werden sowohl bezüglich des minimal verschlissenen positiven Referenzgeräts als auch bezüglich des maximal verschlissenen negativen Referenzgeräts vorbestimmte Anteile der betrachteten Hausgeräte bestimmt, die diesen Datenpunkten maximal nahe sind. Die Anteile können auch Gruppen oder Cluster genannt werden. Die Bewertung eines Hausgeräts in der Abfolge kann dann bezüglich seiner Abstände zu beiden Clustern bestimmt werden. Bevorzugt wird der Abstand auf der Basis einer Differenz von Abständen zu den beiden Clustern bestimmt. So kann berücksichtigt werden, wie nahe das Hausgerät am Positiv-Cluster (der Anteil der zum minimal verschlissenen Hausgerät nächstgelegenen Hausgeräte) und wie nahe es am Negativ-Cluster (der Anteil der zum maximal verschlissenen Hausgerät nächstgelegenen Hausgeräte) liegt.

In einer alternativen Ausführungsform können auch Abstände zum positiven und zum negativen Referenzgerät bestimmt werden und das Hausgerät wird bezüglich einer Differenz beider Abstände bewertet.

Durch das Berücksichtigen der beiden Abstände kann eine Skala aufgespannt werden, sodass eine Position des Hausgeräts auf der Skala bestimmt werden kann. Die Skala kann auf einen vorbestimmten Wertebereich normiert werden, beispielsweise zwischen 1 und 6, zwischen 0 und 10 oder zwischen 1 und 100. Dem Hausgerät kann dadurch ein absolutes Qualitäts- bzw. Nutzbarkeitskriterium zugeordnet werden, das als Prädikat des gebrauchten Geräts verstanden werden kann.

Bevorzugt umfasst ein Nutzungsparameter ein Alter des Hausgeräts. Das Alter wird bevorzugt in Tagen ab einem Herstellungszeitpunkt bestimmt. Dadurch kann reflektiert werden, dass das Hausgerät einfach aufgrund seines Alters verschleißen kann, auch wenn es nicht benutzt wird. Beispielsweise kann ein Kunststoff oder ein Gummi brüchig werden. Metall kann oxidieren. Elektronische Bauelemente können chemisch reagieren, wobei insbesondere Kondensatoren und Halbleiter ihre elektrischen Eigenschaften verändern können.

Weiter bevorzugt umfasst ein Nutzungsparameter eine Anzahl Nutzungen des Hausgeräts. Als Nutzung wird hierbei eine Verwendung im Rahmen des Üblichen verstanden. Beispielsweise kann es sich dabei bei einem Rührgerät um das Rühren eines Kuchenteigs oder einen ähnlichen Vorgang handeln. Ein Mixer kann beispielsweise ein Getränk oder eine Salsa verarbeiten, eine Kaffeemaschine kann ein Heißgetränk zubereiten, eine Waschmaschine eine Ladung Wäsche waschen, ein Wäschetrockner eine Ladung Wäsche trocknen und so weiter. Je nach Art des Hausgeräts kann es sich um eine Anzahl Verwendungen, Bezüge oder Programmabläufe handeln. Sollte sinnvoll keine repräsentative Verwendung definiert werden können, so kann eine Betriebsdauer bestimmt werden, etwa in Form von einer Anzahl geleisteter Betriebsstunden. Eine Nutzung kann das Hausgerät mechanisch, thermisch, elektrisch oder anderswie beanspruchen, sodass ein Material auf Dauer abnutzen oder Schaden nehmen kann. Außerdem ist über eine Anzahl Nutzungen mit gewissen Schäden zu rechnen, die beispielsweise durch Herunterfallen, Eintauchen in eine Flüssigkeit oder Überlasten entstehen können. Durch eine Nutzung können sich Fremdkörper im oder am Hausgerät ansammeln, die auf Dauer die Funktion des Hausgeräts stören können.

Es wurde festgestellt, dass die wichtigsten Nutzungsparameter zur Bewertung eines Hausgeräts sein Alter und seine bisherige Nutzung sind. Es ist daher bevorzugt, dass die Nutzungsparameter mindestens das Alter des Hausgeräts und eine Anzahl Nutzungen umfassen.

Es ist bevorzugt, dass das Hausgerät eine Küchenmaschine, eine Wäschepflegemaschine, ein Elektrowerkzeug oder einen Akkumulator umfasst. Ein Akkumulator ist bevorzugt dazu eingerichtet, an mehreren unterschiedlichen Hausgeräten eingesetzt zu werden. Dabei kann der Akkumulator werkzeuglos an ein Hausgerät an- oder in ein Hausgerät eingesetzt werden. Jedem der genannten Typen von Hausgeräten können vorbestimmte Nutzungsparameter zugeordnet sein, die zur Bewertung des Geräts verwendet werden können. Nachfolgend sind bevorzugte Nutzungsparameter zur Beurteilung eines Hausgeräts aufgeführt:
Alle Arten von Hausgeräten
   - Alter des Geräts
   - Häufigkeit der Benutzung, insbesondere Anzahl der Durchführungen eines gerätespezifischen Vorgangs oder der Ausführung einer gerätespezifischen Funktion, beispielsweise eines Bearbeitungsprogramms
Kaffeemaschinen
   - Alter des Geräts
   - Anzahl der produzierten Getränke (Bezüge)
   - Anzahl der Tage, an denen mindestens ein Getränk produziert wurde
   - Anzahl der Tage, an denen das Gerät nicht mit einer vorbestimmten externen Stelle verbunden war, der Betriebsinformationen über die Kaffeemaschine bereitgestellt werden
   - Maximale Anzahl der Tage, an denen das Gerät nicht mit der externen Stelle verbunden war
   - Anzahl und durchschnittliche Dauer des Verlusts einer drahtlosen Verbindung zur externen Stelle oder zu einem Kommunikationsnetzwerk wie dem Internet
   - Anzahl der Spülungen des Wasserfilters
   - Durchschnittliche Anzahl Nutzungen zwischen Spülungen des Wasserfilters
   - Anzahl der Spülungen des Milchsystems
   - Durchschnittliche Anzahl der Nutzungen zwischen Spülungen des Milchsystems
   - Anzahl der ausgeführten Reinigungsprogramme (einschließlich Reinigungen während kombinierter Reinigungs- und Entkalkungsläufe)
   - Durchschnittliche Anzahl der Nutzungen zwischen Reinigungsprogrammen
   - Anzahl Entkalkungsläufe (einschließlich Entkalkungen während kombinierter Reinigungs- und Entkalkungsläufe)
   - Durchschnittliche Anzahl Nutzungen zwischen den Durchläufen des Entkalkungsprogramms
   - Anzahl Erinnerungen, dass die Entkalkung überfällig ist
   - Anzahl Sperrungen des Geräts für die Getränkeproduktion aufgrund überfälliger Entkalkung
   - Anzahl Fehlermeldungen und/oder Anzahl Fehler pro Fehlertyp
Geschirrspüler
   - Alter des Geräts
   - Anzahl der Spülprogrammdurchläufe
   - Durchschnittliche Anzahl von Tagen, die Benutzer nach einer Salzmangelwarnung zum Nachfüllen von Salz benötigten
   - Durchschnittswert des Wassertrübungssensors
   - Anzahl der Reinigungsprogramme
   - Anzahl der Filterverstopfungen
   - Anzahl Fehlermeldungen und/oder Anzahl Fehler pro Fehlertyp
Waschmaschinen und Wäschetrockner
   - Alter des Geräts
   - Anzahl der Benutzungen
   - Amplitude der Vibration bei verschiedenen Schleuderarten
   - Leistungsaufnahme des Motors
   - Optional: Anzahl Fehlermeldungen und/oder Anzahl Fehler pro Fehlertyp
Bohrmaschinen und ähnliche rotierende Werkzeuge (z. B. Elektroschrauber, Schlagbohrmaschinen, Bohrhämmer, Winkelschleifer, ...)
   - Gesamtnutzungsdauer
   - Anzahl der Betätigungen des Auslösers
   - Belastung des Geräts während der Nutzung
   - ggf. basierend auf einem Histogramm der Eingangsleistung
   - Anzahl der Überhitzungen des Geräts
   - Anzahl der Aktivierungen der Rückschlagkontrolle
   - Anzahl der Abschaltungen des Geräts aufgrund der Erkennung eines Herunterfallens
Akkumulatoren (z. B. für Elektrowerkzeuge, Staubsauger, kleine Küchengeräte)
   - Alter des Geräts
   - Anzahl der Ladevorgänge
   - Verbleibende Lebensdauer des Akkus

Der hierin vorgestellte Ansatz kann leicht um weitere Nutzungsparameter erweitert werden, sodass die bestimmte Gerätequalität bzw. Nutzbarkeit verbessert in Abhängigkeit des Gerätetyps bestimmt werden kann. Für jede Art Hausgerät kann eine eigene Zusammenstellung von Nutzungsparametern zusammengestellt werden, die dann einer einheitlichen Beurteilung von vergleichbaren Hausgeräten zu Grunde gelegt werden kann.

Bevorzugt sind die Nutzungsparameter bezüglich eines Verschleißes des Hausgeräts gleichsinnig skaliert. Ein Nutzungsparameter kann üblicherweise numerisch und eindimensional ausgedrückt werden. Ein niedriger Wert kann für alle Nutzungsparameter einheitlich einen guten und ein hoher Wert einen schlechten Einfluss auf die Qualität des Hausgeräts reflektieren. Ein guter Wert kann sich an einen korrespondierenden Wert eines minimal verschlissenen Hausgeräts annähern und ein schlechter an einen korrespondierenden Wert eines maximal verschlissenen Hausgeräts.

Eine umgekehrte Zuordnung, bei der ein niedriger Wert für einen schlechten und ein hoher Wert für einen guten Einfluss auf das Hausgerät steht, ist ebenfalls möglich; auch in diesem Fall sollten aber vorteilhaft alle Nutzungsparameter dieser Orientierung folgen.

Es ist allgemein bevorzugt, dass ein hierin beschriebenes Verfahren für Haushaltsgeräte desselben Typs ausgeführt wird. So kann sichergestellt werden, dass nur technisch vergleichbare Haushaltsgeräte zur Erstellung einer Bewertung herangezogen werden. Ein Typ kann die Funktion der Hausgeräte umfassen, sodass ein beispielhafter Typ Hausgeräte etwa eine Spülmaschine betreffen kann. Ferner kann ein Hersteller der Hausgeräte berücksichtigt werden, sodass im genannten Beispiel nur Spülmaschinen desselben Herstellers betrachtet werden. Optional wird auch ein Modell des Hausgeräts berücksichtigt, sodass in einer weiteren Fortführung des Beispiels nur Spülmaschinen desselben Modells zur Bewertung betrachtet werden. Andere Aufteilungen sind ebenfalls möglich.

Auf der Basis der Bewertung kann eine Art Zertifikat ausgestellt werden, das die Qualität des Hausgeräts für einen bestimmten Zeitpunkt angibt. So kann das Verfahren ein digitales Signieren eines elektronischen Dokuments umfassen, welches die bestimmte Bewertung umfasst. Das Dokument umfasst ferner bevorzugt einen Zeitpunkt der Bestimmung bzw. Ausstellung. Werte von Nutzungsparametern, die in die Bestimmung eingeflossen sind - und gegebenenfalls auch solche, die bekannt waren, aber nicht eingeflossen sind - können zusätzlich angegeben sein. Ferner umfasst das Dokument bevorzugt eine Angabe des Gerätetyps sowie eine Identifikation des Hausgeräts, beispielsweise in Form einer Geräte-Identifikationsnummer, die ihm von einem Hersteller verliehen wurde. Darüber hinaus kann angegeben sein, wie viele Hausgeräte desselben Typs für die Bewertung berücksichtigt wurden. Weitere Angaben können bei Bedarf ebenfalls von dem Dokument umfasst sein. Auf der Basis des Dokuments kann ein Qualitätswert im Sinne einer verbleibenden Nutzbarkeit verbessert abgeschätzt werden. Auf dieser Basis kann das Gerät beispielsweise weiter eingesetzt, veräußert oder getauscht werden.

Es ist allgemein bevorzugt, dass Nutzungsparameter über eine Vielzahl Hausgeräte über deren Nutzungsdauern kontinuierlich bestimmt werden. Die Hausgeräte können dazu eingerichtet sein, Nutzungsinformationen an eine vorbestimmte Stelle zu übermitteln, die beispielsweise als Server oder als Dienst, etwa in einer Cloud, realisiert sein kann.

So kann für eine Flotte von Hausgeräten kontinuierlich bestimmt werden, welche Hausgeräte noch verwendbar sind bzw. verwendet werden und unter welchen Gerätebedingungen. Daraus können kontinuierlich Informationen abgeleitet werden, um Referenzinformationen bezüglich bekannter Hausgeräte zu bestimmen. Ein einzelnes Hausgerät kann dadurch stets aktuell mit anderen funktionierenden Hausgeräten verglichen bzw. in Kontext gesetzt werden, sodass eine genaue Bestimmung des Verschleißes bzw. der verbliebenen Nutzbarkeit erfolgen kann.

Es wird allgemein davon ausgegangen, dass die hierin beschriebenen Bestimmungen ein noch funktionierendes Hausgerät betreffen. Sollte ein Hausgerät nicht mehr funktionieren, was beispielsweise aufgrund einer entsprechenden Fehlermeldung an die externe Stelle bestimmt werden kann, so können unmittelbar vor dem Defekt gesammelte Daten noch verwendet werden.

Nach einem weiteren Aspekt der vorliegenden Erfindung umfasst eine Vorrichtung zur Bestimmung einer Bewertung eines Hausgeräts eine Schnittstelle zur Erfassung von vorbestimmten Nutzungsparametern für eine Vielzahl Hausgeräte; und eine Verarbeitungseinrichtung. Dabei ist die Verarbeitungseinrichtung dazu eingerichtet, Nutzungsparameter eines Referenzgeräts mit bekannter Qualität zu bestimmen; einen mehrdimensionalen Abstand der Nutzungsparameter des Hausgeräts von den Nutzungsparametern des Referenzgeräts zu bestimmen; und das Hausgerät auf der Basis des Abstands und der Qualität des Referenzgeräts zu bewerten.

Die Verarbeitungseinrichtung kann dazu eingerichtet sein, ein hierin beschriebenes Verfahren teilweise oder vollständig auszuführen. Dazu kann die Verarbeitungseinrichtung elektronisch ausgeführt sein und beispielsweise einen programmierbaren Mikrocomputer oder Mikrocontroller umfassen. Das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden und umgekehrt.

Nach noch einem weiteren Aspekt der Erfindung umfasst ein System eine hierin beschriebene Vorrichtung und eine Vielzahl Hausgeräte. Die Hausgeräte sind bevorzugt desselben Typs oder Hausgeräte desselben Typs werden bezüglich der hierin beschriebenen Technik getrennt voneinander behandelt.

Die Vorrichtung ist vorzugsweise als Dienst auf einem Server realisiert, beispielsweise einer Cloud-Infrastruktur. Die Vorrichtung kann mit einer externen Stelle verbunden sein, die zum Sammeln von Nutzungsdaten von Hausgeräten verwendet wird. In einer weiteren Ausführungsform fallen die Vorrichtung und die externe Stelle zusammen.

Nicht beschränkende Ausführungsformen der Erfindung werden nun unter Bezug auf die beiliegenden Figuren genauer beschrieben, in denen:
- Figur 1: ein System;
- Figur 2: ein Flussdiagramm eines Verfahrens;
- Figur 3: ein Beispiel für die Einstufung von Hausgeräten; und
- Figur 4: beispielhafte Mahalonobis-Abstände ausgewählter Hausgeräte
darstellt.

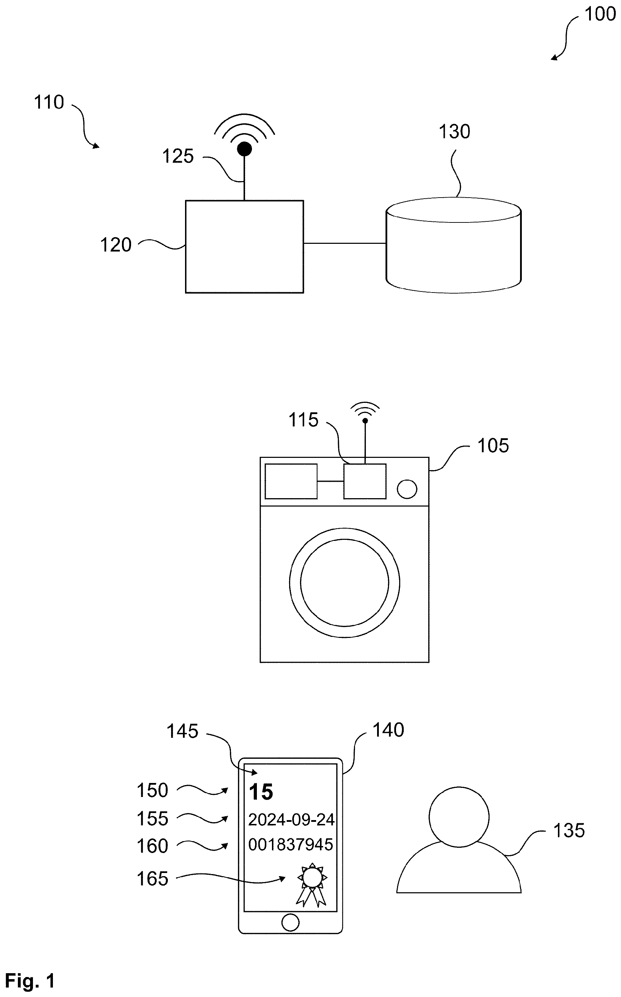

Abbildung 1 zeigt ein System 100, das mindestens ein Hausgerät 105 und eine zu allen Hausgeräten 105 externe Stelle 110 umfasst. Obwohl nur ein einziges Hausgerät 105 in Figur 1 dargestellt ist, wird die hier vorgeschlagene Technik vorzugsweise an einer großen Anzahl von Hausgeräten 105 durchgeführt.

Das in Abbildung 1 gezeigte Hausgerät 105 ist rein beispielhaft als Waschmaschine dargestellt, andere Typen von Hausgeräten 105 sind jedoch ebenso möglich. Das Hausgerät 105 umfasst eine Steuervorrichtung 115, die dazu eingerichtet ist, Nutzungsparameter des Geräts 105 und seines Betriebs zu bestimmen und diese Nutzungsparameter an die externe Stelle 110 weiterzuleiten.

Die externe Stelle 110 umfasst eine Verarbeitungseinrichtung 120, eine Kommunikationsschnittstelle 125 und einen Speicher 130. Über die Kommunikationsschnittstelle 125 können Nutzungsinformationen von den Hausgeräten 105 abgerufen bzw. empfangen und zur späteren Verarbeitung im Speicher 130 abgelegt werden.

Die Nutzungsinformationen können auf einen Zeitpunkt und/oder eine Art der Nutzung hinweisen. Auf der Basis gesammelter Nutzungsinformationen ist bestimmbar, in welcher Weise und über welche Zeit hinweg ein Hausgerät 105 genutzt wurde.

Es wird vorgeschlagen, dass Nutzungsinformationen vieler technisch vergleichbarer Hausgeräte 105 verwendet werden, um eine Verteilung von Nutzungsparametern über die Geräte 105 zu bestimmen. Die Hausgeräte 105 können aufgrund der Nutzungsparameter bezüglich ihrer verbleibenden Qualität bzw. Nutzbarkeit bewertet werden. Dazu können Hausgeräte 105 paarweise bezüglich jeweils mehrerer Nutzungsparameter miteinander verglichen werden. Der Vergleich kann die Bestimmung eines multidimensionalen Abstands zwischen den Hausgeräten 105 umfassen, der insbesondere einen Mahalanobis-Abstand umfassen kann.

Dazu kann ein Benutzer 135 an der externen Stelle 110 eine Bewertung für das Hausgerät 105 anfordern. Dazu kann der Benutzer 135 beispielsweise ein mobiles Gerät 140, insbesondere ein Smartphone, verwenden. Alternativ kann die Bewertung unmittelbar am Hausgerät 105 angefordert werden. Andere Zugänge sind ebenfalls möglich.

Die externe Stelle 110 kann die Bewertung für das Gerät 105 bestimmen und ein elektronisches Dokument 145 bereitstellen, das die Bewertung und Umstände der Bewertung umfasst. Der Benutzer 135 kann das Dokument 145 beispielsweise ausdrucken, in elektronischer Form verschicken oder anderweitig nutzen. In der in Abbildung 1 gezeigten beispielhaften Ausführungsform umfasst das elektronische Dokument 145 die bestimmte Bewertung 150, einen Zeitstempel 155, der sich auf den Zeitpunkt der Bewertung 150 bezieht, eine Identifikation 160 des betreffenden Geräts 105 und eine kryptografische Signatur 165 durch die externe Stelle 110. Die Signatur kann mittels eines privaten Schlüssels durchgeführt werden, dessen korrespondierender öffentliche Schlüssel bekannt ist. So kann die Authentizität des Dokuments 145 bewiesen und eine Fälschung oder Manipulation des Dokuments 145 verhindert werden. Das Dokument 145 kann noch weitere Informationen tragen. Die Informationen des Dokuments 145 sind bevorzugt in von Menschen lesbaren Form hinterlegt. Die Signatur 165 kann alle oder nur ausgewählte Informationen umfassen.

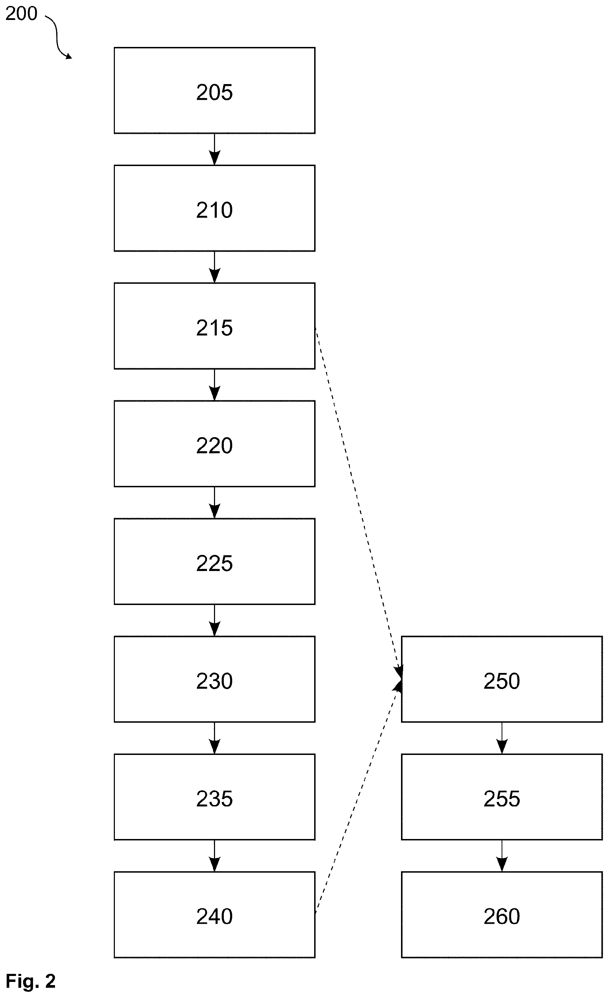

Figur 2 zeigt ein Ablaufdiagramm eines Verfahrens 200 in einer beispielhaften Ausführungsform. Wesentliche Teile des Verfahrens 200 können auf einer externen Stelle 110 durchgeführt werden.

In einem Schritt 205 werden Nutzungsparameter für eine Vielzahl Hausgeräte 105 erfasst. Nutzungsparameter können turnusmäßig an die externe Stelle 110 übermittelt werden, wenn ein Hausgerät 105 in einem Haushalt verwendet wird. Die Nutzungsparameter können insbesondere einen Hinweis auf eine Nutzung sowie eine Nutzungszeit umfassen. Eine Art oder ein Umfang der Nutzung kann ebenfalls angegeben werden. Nutzungsinformationen können individuell pro Nutzung oder als Zusammenfassung über mehrere Nutzungen an die externe Stelle 110 bereitgestellt werden. Die empfangenen Nutzungsinformationen können im Speicher 130 abgelegt werden. Jeder Nutzungsinformation ist ein bestimmtes Hausgerät 105 zugeordnet und einem Hausgerät 105 sind üblicherweise mehrere Nutzungsinformationen zugeordnet.

In einem Schritt 210 kann eine Kovarianzmatrix der Verteilung der Nutzungsparameter bestimmt werden. In einem Schritt 215 können Nutzungsparameter für Referenzgeräte festgelegt werden. Ein positives Referenzgerät kann einem Hausgerät 105 mit einem minimalen Verschleiß und einer maximalen Qualität oder verbleibenden Nutzung entsprechen. Ein negatives Referenzgerät kann ein Hausgerät 105 mit einem maximalen Verschleiß und einer minimalen verbleibenden Nutzung umfassen. Die Referenzgeräte können anhand von Hausgeräten 105 bestimmt werden, von denen bereits Nutzungsinformationen empfangen wurden. Nutzungsparameter eines Referenzgeräts können aber auch analytisch bzw. synthetisch gebildet werden. Insbesondere können Nutzungsparameter des positiven Referenzgeräts so bestimmt werden, dass sie jeweils auf einen kleinstmöglichen Verschleiß hinweisen. Insbesondere können ein Alter und/oder eine Anzahl Nutzungen auf einen vorbestimmten, möglichst kleinen Wert gesetzt werden kann, insbesondere einen Wert nahe null. In einer Ausführungsform wird für einen der Nutzungsparameter ein negativer Wert verwendet, der von einem realen Hausgerät nicht erreicht werden kann.

In einem Schritt 220 werden bevorzugt für alle Hausgeräte 105 mehrdimensionale Abstände zu den beiden Referenzpunkten bestimmt. Ein Abstand kann bezüglich einer beliebigen Vielzahl Nutzungsparameter bestimmt werden, die beiden Partnern zugeordnet sind. Ein Abstand zwischen zwei Hausgeräten 105 wird bevorzugt bezüglich der Standardabweichung der Parameter normiert, wozu die Inverse der im Schritt 210 bestimmten Kovarianz-Matrix verwendet werden kann. Hierin beschriebene Abstände werden bevorzugt als Mahalanobis-Abstände bzw. Mahalanobis-Distanzen (MD) bestimmt.

In einem Schritt 225 können ein Good Cluster und ein Bad Cluster bestimmt werden. Der Good Cluster ist gebildet durch einen vorbestimmten Anteil der Hausgeräte 105, deren MD zum positiven Referenzgerät am geringsten ist. Der Anteil kann beispielsweise ca. 10% der Hausgeräte 105 umfassen. In entsprechender Weise ist der Bad Cluster gebildet durch einen vorbestimmten Anteil der Hausgeräte 105, deren MD zum negativen Referenzgerät am geringsten ist. Für beide Cluster können in einem Schritt 230 die Verteilungen der Nutzungsparameter bestimmt werden. Auf dieser Basis kann ein Punkt bestimmt werden, der für den Good Cluster repräsentativ ist, und ein Punkt, der für den Bad Cluster repräsentativ ist. Der Punkt hat so viele Dimensionen wie Nutzungsparameter berücksichtigt werden. Ein Abstand eines Hausgeräts 105 zu einem Cluster kann bezüglich des entsprechenden Punkts bestimmt werden.

Bevorzugt wird eine Skala zwischen den gewählten Extremen, also zwischen den Referenzgeräten oder zwischen den Punkten der Cluster gebildet. Die Skala kann normiert werden, sodass sie vorbestimmte Minimal- und Maximalwerte umfasst. Üblicherweise ist die Skala linear.

In einem Schritt 235 können für alle Hausgeräte 105 Abstände zu den Clustern und eine Differenz der Abstände bestimmt werden. Da der Vergleich mehrdimensional ist, bedeutet eine Nähe zu einem der Cluster nicht notwendigerweise einen großen Abstand zum anderen Cluster.

In einem Schritt 240 kann eine Rangfolge der Hausgeräte 105 bezüglich der Differenzen bestimmt werden. So können die Hausgeräte 105 in eine Reihenfolge bezüglich ihrer Qualität bzw. der verbleibenden Nutzbarkeit gebracht werden.

Der bis hier beschriebene Teil des Verfahrens 200 kann unabhängig von einem folgenden Teil ausgeführt werden. Es ist bevorzugt, dass der bereits beschriebene Teil kontinuierlich oder zeitgesteuert ausgeführt wird, um stets aktuelle Vergleichsdaten von Hausgeräten 105 zur Verfügung zu haben. Üblicherweise ist es nicht erforderlich, eine feinere Auflösung als ca. 1 Tag anzustreben. Die Bestimmung kann beispielsweise täglich, wöchentlich oder monatlich ausgeführt werden.

Ein weiterer Teil des Verfahrens 200 kann als unabhängig bzw. als eigenständiges Verfahren angesehen werden, erfordert aber in den Schritten 205 bis 240 erstellte Informationen. In einem Schritt 250 kann eine Anforderung zur Bewertung eines Hausgeräts erfasst werden. Die Anforderung kann insbesondere von einer Person bereitgestellt sein, die dem Hausgerät 105 zugeordnet ist. Es kann geprüft werden, ob die Person zur Stellung der Anforderung zugelassen ist, beispielsweise indem die Person authentifiziert wird und bestimmt wird, dass eine Zuordnung zum Hausgerät 105 existiert. Die Anforderung kann optional an die Zahlung einer Gebühr gekoppelt sein, welche die Person für die Bearbeitung leisten muss.

In einem Schritt 255 wird die Qualität des Hausgeräts 105 bestimmt. Dazu werden bevorzugt bezüglich ihrer Nutzungsparameter Abstände zu den zuvor gewählten Referenzpunkten bestimmt. Die Referenzpunkte können das positive bzw. negative Referenzgerät oder Punkte im Good Cluster bzw. Bad Cluster umfassen. Die mehrdimensionalen Abstände werden bevorzugt als MD bestimmt. Dann kann eine Differenz der Abstände bestimmt werden. Bevorzugt wird das Resultat auf die zuvor bestimmte Skala abgebildet.

In einem Schritt 260 kann das Hausgerät 105 auf der Basis des Resultats bewertet werden. Die Bewertung kann eine einzelne Zahl umfassen, die auf der Skala liegt. Die Bewertung und optional weitere Umstände ihrer Bestimmung können in Textform auf einem Zertifikat angegeben werden. Dabei kann ein Teil des Zertifikats, der die Bewertung umfasst, auf der Basis eines kryptografischen Schlüssels digital signiert werden. Das Zertifikat kann dem Benutzer in Antwort auf die Anforderung im Schritt 250 bereitgestellt werden.

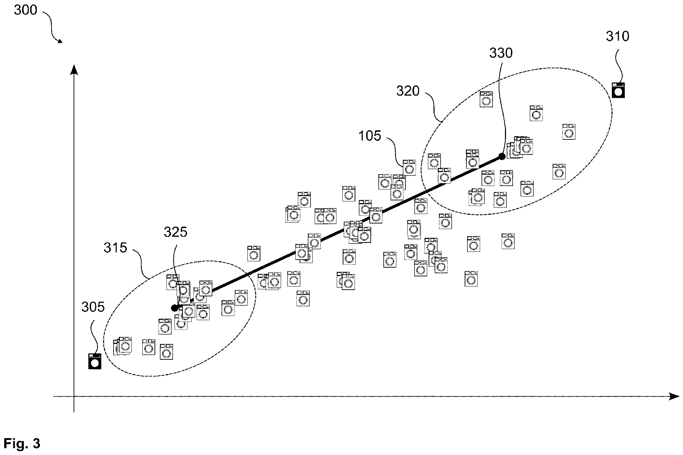

Figur 3 zeigt eine beispielhafte Darstellung wichtiger Elemente einer hierin beschriebenen Technik in einer Ausführungsform. In einem zweidimensionalen kartesischen Koordinatensystem sind Nutzungsparameter einer Vielzahl Hausgeräte 105 symbolisch dargestellt. In horizontaler Richtung ist ein Alter und in vertikaler Richtung eine Nutzung angetragen.

Aus den abgebildeten Hausgeräten 105 wurden ein positives Referenzgerät 305 und ein negatives Referenzgerät 110 gewählt. Das positive Referenzgerät 305 ist sowohl bezüglich seines Alters als auch seiner Nutzungszahl ideal (niedrige Werte), das negative Referenzgerät 310 ist bezüglich seines Alters und seiner Nutzungszahl maximal unvorteilhaft (hohe Werte).

Ca. 20 % der Hausgeräte 105, die den geringsten MD zum positiven Referenzgerät 305 haben, werden in einem Good Cluster 315 zusammengefasst. Ca. 20 % der Hausgeräte 105, die den geringsten MD zum negativen Referenzgerät 305 haben, werden in einem Bad Cluster 320 zusammengefasst. Den Clustern 315, 320 wurden Punkte 325, 330 zugeordnet, die jeweils einen Mittelwert darstellen.

Ein Qualitätsmaß für ein Hausgerät 105 kann bestimmt werden, indem ein erster MD zum ersten Punkt 325 und ein zweiter MD zum zweiten Punkte 330 bestimmt werden. Die Differenz der bestimmten MD ist dann ein Hinweis auf die Qualität des Hausgeräts 105.

Die hierin beschriebe Technik ist einem bekannten Ansatz überlegen, der als K-means Clustering bekannt ist. Ein k-Means-Algorithmus ist ein Verfahren zur Vektorquantisierung, das auch zur Clusteranalyse verwendet wird. Dabei wird aus einer Menge von ähnlichen Objekten eine vorher bekannte Anzahl von k Gruppen gebildet. Dann werden Parametergrenzen bestimmt, die eine Zuordnung eines Exemplars zu einem Cluster erlauben, sodass die Cluster gleich stark belegt sind. Der Algorithmus ist eine der am häufigsten verwendeten Techniken zur Gruppierung von Objekten, da er schnell die Zentren der Cluster findet. Dabei bevorzugt der Algorithmus Gruppen mit geringer Varianz und ähnlicher Größe. Erweiterungen sind der k-Median-Algorithmus und der k-Means++ Algorithmus.

K-means Clustering ist aufwändig (NP-hart) und skaliert schlecht mit einer großen Vielzahl betrachteter Hausgeräte 105. Clustergrenzen können ungünstig liegen, sodass es viele Grenzfälle geben kann, in denen ein Unterschied in der Zuordnung zu einem Cluster nur wenig aussagekräftig ist.

Das vorgeschlagene Verfahren ist auch einem anderen Ansatz überlegen, bei dem eine Beurteilung oder Kategorisierung durch Experten erfolgt. Eine solche Beurteilung ist stets subjektiv und kann irreführende Ergebnisse liefern. Die Bewertung durch Experten kann unbekannten Einflüssen unterliegen, die sich über die Zeit ändern können. Der Einsatz von Experten für die Bestimmung in der vorgeschlagenen Häufigkeit kann aufwändig sein. Die Tätigkeit des Experten ist repetitiv und kann zu Ermüdungserscheinungen führen, die Einfluss auf das Urteil haben können.

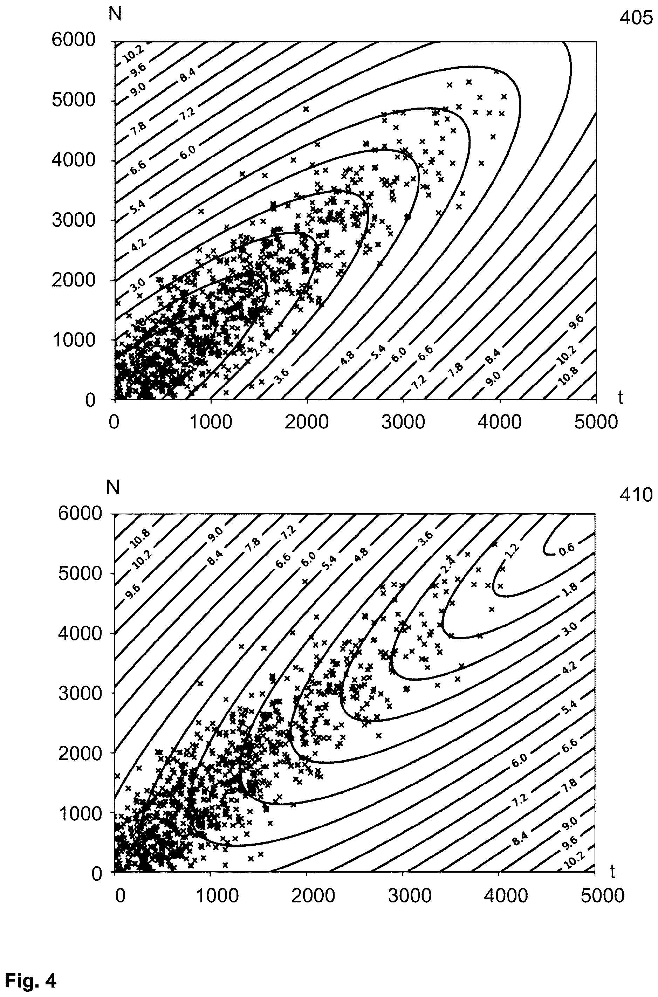

Figur 4 zeigt beispielhafte Mahalonobis-Abstände ausgewählter Hausgeräte 105. Ein oberes und ein unteres Diagramm zeigen jeweils in horizontaler Richtung ein Alter und in vertikaler Richtung eine Anzahl Nutzungen an. Kreuze markieren einzelne Hausgeräte 105 eines beispielhaften Datensatzes.

In einem oberen Diagramm 405 sind als Kurven Mahalanobis-Abstände zu einem Hausgerät des Alters null mit null Nutzungen dargestellt. In einem unteren Diagramm 410 sind als Kurven Mahalanobis-Abstände zu einem Hausgerät 105 mit maximalem Alter (6000) mit einer maximalen Anzahl Nutzungen (6000) dargestellt.

### Bezugszeichen

- 100: System
- 105: Hausgerät
- 110: externe Stelle
- 115: Steuervorrichtung
- 120: Verarbeitungseinrichtung
- 125: Kommunikationsschnittstelle
- 130: Speicher
- 135: Benutzer
- 140: Mobilgerät
- 145: elektronisches Dokument
- 150: Klasse, Art, Typ
- 155: Zeitstempel
- 160: Identifikation, Seriennummer
- 165: Signatur

- 200: Verfahren
- 205: Nutzungsparameter für Hausgeräte erfassen
- 210: Kovarianzmatrix der Verteilung der Nutzungsparameter bestimmen
- 215: Referenzpunkt mit maximaler/minimaler Qualität festlegen
- 220: Für alle Geräte: Abstand zu Referenzpunkten bestimmen
- 225: Good Cluster und Bad Cluster bestimmen
- 230: Verteilung der Nutzungsparameter in den Clustern schätzen
- 235: Für alle Geräte: Differenzen der Abstände zu den Clustern bestimmen
- 240: Rangfolge der Hausgeräte bestimmen
- 250: Anforderung für Bewertung eines Hausgeräts erfassen
- 255: Hausgerät auf Basis der Differenz der Abstände bewerten
- 260: Zertifikat bereitstellen
- 300: Darstellung
- 305: positives Referenzgerät
- 310: negatives Referenzgerät
- 315: Good Cluster
- 320: Bad Cluster
- 325: erster Punkt
- 330: zweiter Punkt

- 405: Diagramm
- 410: Diagramm
- N: Anzahl Nutzungen
- t: Alter

## Patentansprüche

1. Verfahren (200), insbesondere Computer-implementiertes Verfahren, zum Bewerten eines Hausgeräts (105), wobei das Verfahren (200) folgende Schritte umfasst:
- Bestimmen (205) vorbestimmter Nutzungsparameter für eine Vielzahl weiterer Hausgeräte (105);
- Bestimmen (215, 230) von Nutzungsparametern eines Referenzgeräts (305, 310) mit bekannter Qualität;
- Bestimmen (255) eines mehrdimensionalen Abstands der Nutzungsparameter des Hausgeräts (105) von den Nutzungsparametern des Referenzgeräts (305, 310); und
- Bewerten des (260) Hausgeräts (105) auf der Basis des Abstands und der Qualität des Referenzgeräts (305, 310).

2. Verfahren (200) nach Anspruch 1, wobei der Abstand bezüglich einer Standardabweichung der Nutzungsparameter normiert ist.

3. Verfahren (200) nach Anspruch 1 oder 2, wobei der Abstand als Mahalanobis-Abstand bestimmt wird.

4. Verfahren (200) nach einem der vorangehenden Ansprüche, wobei das Referenzgerät (305) ein minimal verschlissenes Hausgerät (105) umfasst.

5. Verfahren (200) nach Anspruch 4, wobei ein Anteil der Hausgeräte (105) mit dem geringsten Abstand zum minimal verschlissenen Hausgerät (105) bestimmt wird; und das Hausgerät (105) auf der Basis des Abstands zu diesem Anteil bewertet wird.

6. Verfahren (200) nach einem der vorangehenden Ansprüche, wobei das Referenzgerät (310) ein maximal verschlissenes Hausgerät (105) umfasst.

7. Verfahren (200) nach Anspruch 6, wobei ein Anteil der Hausgeräte (105) mit dem geringsten Abstand zum maximal verschlissenen Hausgerät (105) bestimmt wird; und wobei das Hausgerät (105) auf der Basis des Abstands zu diesem Anteil bewertet wird.

8. Verfahren (200) nach Ansprüchen 5 und 7, wobei die Bewertung auf der Basis einer Differenz der Abstände bestimmt wird.

9. Verfahren (200) nach einem der vorangehenden Ansprüche, wobei ein Nutzungsparameter ein Alter des Hausgeräts (105) umfasst.

10. Verfahren (200) nach einem der vorangehenden Ansprüche, wobei ein Nutzungsparameter eine Anzahl Nutzungen des Hausgeräts (105) umfasst.

11. Verfahren (200) nach einem der vorangehenden Ansprüche, wobei die Nutzungsparameter bezüglich eines Verschleißes des Hausgeräts (105) gleichsinnig skaliert sind.

12. Verfahren (200) nach einem der vorangehenden Ansprüche, ferner umfassend ein digitales Signieren (260) eines elektronischen Dokuments (145), welches die bestimmte Bewertung umfasst.

13. Verfahren (200) nach einem der vorangehenden Ansprüche, wobei Nutzungsparameter über eine Vielzahl Hausgeräte (105) über eine Nutzungsdauer der Hausgeräte (105) kontinuierlich bestimmt werden.

14. Vorrichtung (140) zur Bestimmung einer Bewertung eines Hausgeräts (105), wobei die Vorrichtung folgende Elemente umfasst:
- eine Schnittstelle (125) zur Erfassung von vorbestimmten Nutzungsparametern für eine Vielzahl Hausgeräte (105); und
- eine Verarbeitungseinrichtung (120), die dazu eingerichtet ist,
- Nutzungsparameter eines Referenzgeräts (305, 310) mit bekannter Qualität zu bestimmen;
- einen mehrdimensionalen Abstand der Nutzungsparameter des Hausgeräts (105) von den Nutzungsparametern des Referenzgeräts (305, 310) zu bestimmen; und
- das Hausgerät (105) auf der Basis des Abstands und der Qualität des Referenzgeräts (305, 310) zu bewerten.

15. System (100), umfassend eine Vorrichtung (140) nach Anspruch 14 und eine Vielzahl Hausgeräte (105).
